(19) Europäisches Patentamt
European Patent Office
Office européen des brevets

(11) **EP 3 480 455 B1**

(12) **EUROPEAN PATENT SPECIFICATION**

(45) Date of publication and mention
of the grant of the patent:
**20.01.2021 Bulletin 2021/03**

(51) Int Cl.:
***F03D 17/00*** *(2016.01)*

(21) Application number: **17824175.8**

(22) Date of filing: **03.07.2017**

(86) International application number:
**PCT/JP2017/024282**

(87) International publication number:
**WO 2018/008571 (11.01.2018 Gazette 2018/02)**

(54) **WIND TURBINE MONITORING DEVICE, WIND TURBINE MONITORING METHOD, WIND TURBINE MONITORING PROGRAM, AND STORAGE MEDIUM**

WINDTURBINENÜBERWACHUNGSVORRICHTUNG, WINDTURBINENÜBERWACHUNGSVERFAHREN, WINDTURBINENÜBERWACHUNGSPROGRAMM UND SPEICHERMEDIUM

DISPOSITIF DE SURVEILLANCE D'ÉOLIENNE, PROCÉDÉ DE SURVEILLANCE D'ÉOLIENNE, PROGRAMME DE SURVEILLANCE D'ÉOLIENNE ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.07.2016 JP 2016132661**

(43) Date of publication of application:
**08.05.2019 Bulletin 2019/19**

(73) Proprietor: **Japan Steel Works M&E, Inc.**
**Hokkaido 051-8505 (JP)**

(72) Inventors:
• **SUZUKI, Jun**
**Muroran-shi**
**Hokkaido 051-8505 (JP)**
• **MUTO, Atsutoshi**
**Muroran-shi**
**Hokkaido 051-8505 (JP)**
• **FUJITA, Yasuhiro**
**Muroran-shi**
**Hokkaido 051-8505 (JP)**
• **SUZUKI, Hiroyuki**
**Muroran-shi**
**Hokkaido 051-8505 (JP)**

(74) Representative: **Grünecker Patent- und Rechtsanwälte**
**PartG mbB**
**Leopoldstraße 4**
**80802 München (DE)**

(56) References cited:
**WO-A2-2012/044161     WO-A2-2012/044161**
**JP-A- 2004 101 417     JP-A- 2015 117 682**
**JP-A- 2016 188 612     US-A1- 2006 070 435**

**Description**

TECHNICAL FIELD

The present disclosure relates to technologies for monitoring states of a wind turbine generator, and particularly to a wind turbine monitoring apparatus, a wind turbine monitoring method, a wind turbine monitoring program, and a storage medium for monitoring a fatigue life state due to heat, vibration, and the like of electronic parts and devices in the wind turbine generator.

BACKGROUND ART

In the related art, there are apparatuses proposed in PTL 1 and PTL 2 as apparatuses for monitoring states of wind turbine generators (hereinafter, referred to as wind turbines). The apparatus proposed in PTL 1 is a wind turbine monitoring apparatus which automatically performs wind turbine state monitoring and also quantitatively performs state evaluation in accordance with an appropriate reference. The apparatus proposed in PTL 2 is a state monitoring system which generates a threshold value for abnormality of a device provided in the wind turbine by using data collected before diagnosis and then performs diagnosis on the basis of data collected during the diagnosis and the generated threshold value.

As illustrated in NPL 1, extreme load evaluation for checking safety against a maximum load (50-year recurrence cycle) caused by a gust, turbine failure, and other sever wind conditions and/or turbine state and fatigue load evaluation for checking safety against a fatigue load which turbine will experience in its design life are considered at the time of designing the wind turbine. Although the design standards evaluate an extreme load acting on wind turbine due to a specific shape of gust, the standards do not describe a method for quantitatively evaluating influences of a unique gust that frequently happens and is often observed in mountainous terrains. Further, extreme wind speed and turbulent intensity are used for wind condition assessment in site according to the standard described in NPL 1. The turbulent intensity is obtained by dividing standard deviation of wind speed by mean wind speed and indicates a degree of disturbance of wind. Turbulent intensity at 15 m/s is assumed to be reference turbulent intensity in the site, is regarded as one of criteria for site wind condition assessment, and the wind turbine is not suit for site wind condition in case the reference turbulent intensity at the site exceeds designed turbulent intensity.

However, the turbulent intensity is just a one of index expressing wind variation characteristics and it has different affects to the wind turbine depending on a cycle and a pattern of variations.

Since a gust caused by terrains or weathers is generated intermittently, in particular, the gust tends not to be reflected to an increase in the turbulent intensity.

However, the gust may cause significantly damage to the wind turbine.

PTL 3 discloses a method and apparatus for condition-based monitoring of wind turbine components.

CITATION LIST

PATENT LITERATURE

PTL 1: JP-A-2009-243428
PTL 2: JP-A-2016-8536
PTL3: US 2006/070435 A1

NON PATENT LITERATURE

NPL 1: IEC61400-01, GL2003, A Design Code and Commentary for Wind Turbine Support Structures and Foundations 2010

SUMMARY OF INVENTION

TECHNICAL PROBLEM

The related-art apparatus for monitoring states of a wind turbine is a wind turbine monitoring apparatus for monitoring states of a wind turbine by using characteristic values created on the basis of measurement data measured by a plurality of sensors mounted at the wind turbine as proposed in PTL 1, and the apparatus extracts data sets necessary for diagnosis and automatically diagnose states in accordance with predefined determination criteria.

However, since damage degree on devices in the wind turbine strongly depends on wind speed and a running history, it is difficult to make determination on the basis of partially extracted data. Also, a running record of the device of the same type is needed in order to diagnose states with the predefined determination criteria, and precision of determination depends on the running record.

In addition, although the one proposed in PTL 2 sets a threshold value by using machine learning in a measurement period of preset determination criteria, it is difficult to clearly set a proper amount of the determination criteria, and it is necessary to accumulate knowledge based on actual measurement over a long period of time. Since the damage degree on devices strongly depends on wind conditions at the location at which the wind turbine is mounted, there is a problem that, since actual measurement data over a long period of time at the location is needed for each wind turbine, it takes a long time to obtain precision in monitoring states and the precision varies.

In addition, in a wind farm or the like in which wind turbines of different models are present together, there are problems that: it is difficult to uniformly perform evaluation; and it is not possible to distinguish which of wind conditions at the location at which the wind turbine is mounted and the device itself a factor of damage on the device is.

Further, there is a problem that, since a large number of recording devices are needed to record a plurality of data indexes, devices that processes the data indexes require cost and it takes a time to perform calculation.

The present disclosure was made in order to solve the aforementioned problems, and an object thereof is to provide a wind turbine monitoring apparatus, a wind turbine monitoring method, a wind turbine monitoring program, and a recording medium capable of appropriately determining wind condition states caused by a gust at a location at which a wind turbine generator is mounted and easily calculating and monitoring degrees of damage at the respective parts.

SOLUTION TO PROBLEM

A wind turbine monitoring apparatus according to one illustrative aspect of the present disclosure, is a wind turbine monitoring apparatus configured to monitor a wind turbine by acquiring a temporal change in a wind speed of the wind turbine, the monitoring apparatus comprising: a monitoring controller configured to obtain a time history waveform of the wind speed from wind speed data indicating the temporal change in the wind speed of the wind turbine, wherein the monitoring controller is configured to: extract a gust from the time history waveform of the wind speed; perform gust evaluation; and calculate damage degree on predetermined devices in the wind turbine in a cumulative manner on the basis of the gust evaluation for the respective gust shapes of the gust.

Further, the monitoring controller may be configured to acquire the wind speed data via a network.

Further, the gust evaluation may comprise measuring at least one of a volume and an occurrence frequency of the gust.

Further, the gust evaluation may comprise measuring positions of the gust with the gust shapes.

Further, the monitoring controller is configured to classify the gust shapes using the gust evaluation.

Further, the monitoring controller has information related to the damage degree on the predetermined devices for each of the classified gust shapes.

Further, the monitoring controller may be configured to calculate the damage degree on the predetermined devices in a cumulative manner in accordance with the gust shapes and the occurrence frequency of the gust.

Further, the monitoring controller may be configured to extract the gust using a window method from the time history waveform of the wind speed.

Further, the monitoring controller may be configured to determine the gust shapes using a rainflow-counting method from a time history waveform comprising the extracted gust.

Further, the monitoring controller may be configured to evaluate the damage degree by using at least one of displacement response, load response, vibration response, and heat response for the predetermined devices.

Further, the monitoring controller is configured to determine at least one of a degree of damage, remaining life, and presence of abnormality on the basis of the cumulative damage degree.

Further, the monitoring controller is configured to determine at least one of the degree of damage, the remaining life, and the presence of abnormality on the basis of the gust shapes and the number of times of counting in addition to the cumulative damage degree.

Further, a wind turbine monitoring method according to one illustrative aspect of the present disclosure is a wind turbine monitoring method comprising the steps of: acquiring wind speed data that indicates a temporal change in a wind speed of a wind turbine; obtaining a time history waveform of the wind speed on the basis of the acquired wind speed data; extracting a gust from the time history waveform of the wind speed and performing gust evaluation; and calculating damage degree on predetermined devices in the wind turbine in a cumulative manner on the basis of the gust evaluation for the respective gust shapes.

Further, a wind turbine monitoring program according to one illustrative aspect of the present disclosure is a wind turbine monitoring program for causing a computer to execute steps of: acquiring wind speed data that indicates a temporal change in a wind speed of a wind turbine; obtaining a time history waveform of the wind speed on the basis of the acquired wind speed data; extracting a gust from the time history waveform of the wind speed; performing gust evaluation on the basis of the extracted gust; and calculating damage degree on predetermined devices in the wind turbine in a cumulative manner on the basis of the gust evaluation for the respective gust shapes.

Further, a computer-readable storage medium according to one illustrative aspect of the disclosure is a computer-readable storage medium in which the above-explained monitoring program is stored.

Further, a monitoring apparatus according to one illustrative aspect of the disclosure is a monitoring apparatus comprising: at least one processor; and at least one memory storing computer-readable instructions which, when executed by the processor, cause the monitoring apparatus to: acquire wind speed data that indicates a temporal change in a wind speed of a wind turbine; extract a gust on the basis of the wind speed data; measure parameters associated with the gust; and calculate damage degree on the wind turbine in a cumulative manner on the basis of the measured parameters for the respective gust shapes.

ADVANTAGEOUS EFFECTS OF INVENTION

According to the present disclosure, it is possible to settle on evaluation indexes including a degree and an occurrence frequency of the gust at a location at which a wind turbine is constructed merely from a wind speed of the wind turbine as described above. In this manner, evaluation before construction of the wind turbine is appropriately performed, and it is possible to expect that breakdown of the wind turbine is suppressed and that the amount of generated power increases.

BRIEF DESCRIPTION OF DRAWINGS

[Fig. 1] Fig. 1 is a diagram illustrating block portions in a monitoring apparatus according to an embodiment of the present disclosure.
[Fig. 2] Fig. 2 is a diagram for describing extraction of the gust using a window method.
[Fig. 3] Fig. 3 is a diagram for describing gust shapes using a rainflow-counting method.
[Fig. 4] Fig. 4 is a diagram illustrating an example of classification content of the gust shapes.
[Fig. 5] Fig. 5 is a flowchart illustrating a procedure for calculating the cumulative damage degree.
[Fig. 6] Fig. 6 is a graph illustrating a relationship between a gust shape and an element temperature difference.
[Fig. 7] Fig. 7 is a graph illustrating a relationship between the cumulative damage degree and the element temperature difference.

DESCRIPTION OF EMBODIMENTS

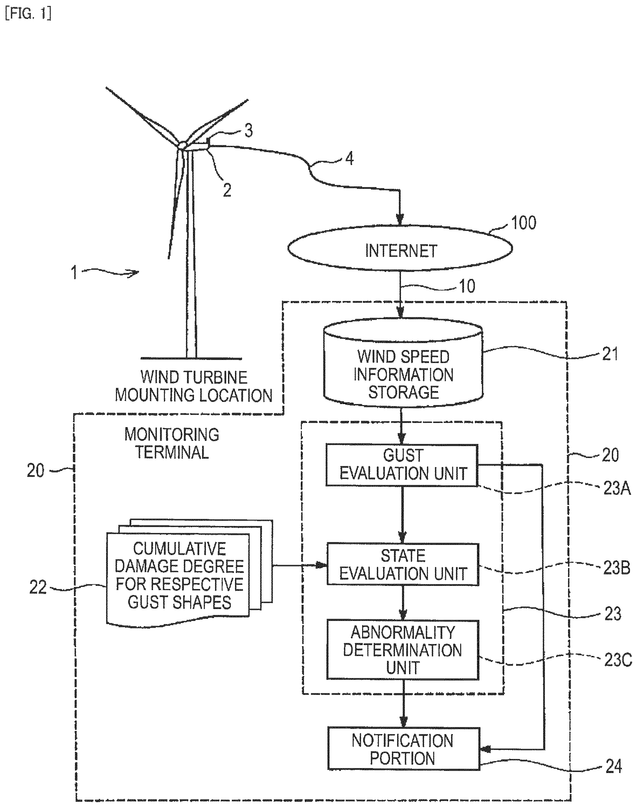

Hereinafter, an embodiment as an aspect of the present disclosure will be described with reference to Figs. 1 to 7.

In a wind turbine 1, an anemometer 3 is attached to a nacelle 2. A network 4 is connected to the wind turbine 1. The network 4 is connected to the Internet 100. A network 10 is connected to the Internet 100. The network 10 is electrically connected to a monitoring terminal 20 for monitoring the wind turbine. The networks 4 and 10 and the Internet 100 correspond to networks described in the present disclosure. Appropriate networks such as local area networks (LANs) or wide area networks (WANs) may be used, and any of wired and wireless networks may be used. The monitoring terminal 20 corresponds to the monitoring apparatus according to the present disclosure. Note that the networks 4 and 10 may include network interfaces (not illustrated) for connection to the Internet 100.

The monitoring terminal 20 has a wind speed information storage 21, a monitoring controller 23 that controls the entire monitoring terminal 20, a damage storage 22 that stores cumulative damage degree for the respective gust shapes, and a notification portion 24 such as a display. The notification portion 24 may provide a notification such as sound.

Random access memories (RAMs), flash memories, hard disk drives (HDDs), and the like can appropriately be used as the wind speed information storage 21 and the damage storage 22, and the present disclosure is not limited to specific ones. Also, the wind speed information storage 21 and the damage storage 22 may be configured of the same devices or different devices. One or both of the wind speed information storage 21 and the damage storage 22 may be mounted outside a monitoring apparatus main body and be electrically connected to the monitoring apparatus main body with signal lines or may be prepared as storages that are separate from the monitoring terminal 20.

The monitoring controller 23 may be configured of a central processing unit (CPU) and a monitoring program to be executed on the CPU.

The monitoring controller 23 is configured to include a memory (not illustrated) and a processor (not illustrated). The memory is configured to store computer-readable commands (programs). The memory is configured of a read only memory (ROM) in which various programs or the like are stored, a RAM that has a plurality of working areas in which various programs or the like to be executed by the processor are stored, and the like for example. The processor is a CPU, a micro processing unit (MPU), and/or a graphics processing unit (GPU), for example, and is configured to develop programs, which are designated from various programs incorporated in the ROM, on the RAM and execute various kinds of processing in cooperation with the RAM. That is, the monitoring controller 23 is configured to control various operations of the monitoring terminal 20 by the processor developing the monitoring program for executing the monitoring method according to the embodiment on the RAM and executing the monitoring program in cooperation with the RAM.

The monitoring controller 23 may include a non-volatile memory that stores a monitoring program, operation parameters, and the like, a RAM that serves as a working area, and the like in addition to the above components. Note that the monitoring program and various kinds of data may be stored in various storage media and may be stored in a storage device (storage) such as an HDD, a solid state drive (SSD), or a USB flash memory.

The monitoring controller 23 has a gust evaluation unit 23A that extracts a gust from wind speed data stored in the wind speed information storage 21 and performs gust evaluation. An evaluation result of the gust evaluation unit 23A is acquired by a state evaluation unit 23B. Information regarding the cumulative damage degree for the respective gust shapes is provided from the damage storage 22 to the state evaluation unit 23B. An evaluation result of the state evaluation unit 23B is provided to an abnormality determination unit 23C, and a determination result of the abnormality determination unit 23C is provided to the notification portion 24 as needed.

Note that although the embodiment is described on the assumption that the gust evaluation unit 23A, the state evaluation unit 23B, and the abnormality determination unit 23C are respectively included in the monitoring controller 23, these parts may not be clearly distinguished in the monitoring controller 23, and the respective functions may be executed by programs.

Hereinafter, operations of the monitoring terminal 20 will be described.

The wind speed information storage 21 acquires data regarding a temporal change in a wind speed obtained by the anemometer 3 of the wind turbine 1 through the network 4, the Internet 100, and the network 10 and sequentially records the data therein. The data is acquired by the monitoring program executed by the monitoring controller 23 and is stored in the wind speed information storage 21. The gust evaluation unit 23A reads wind speed data based on a temporal change from the wind speed information storage 21 and obtains a time history waveform of the wind speed. Further, the gust evaluation unit 23A extracts the gust from the time history waveform of the wind speed. The extraction of gust may be performed by a window method, for example. The window method is a method in which a moving window with a finite time width (5 seconds, for example) is defined with respect to a time-series wind speed waveform, and a difference between the start wind speed and a maximum wind speed of the time-series waveform in the window is extracted as a volume of gust.

The gust evaluation unit 23A performs extraction using the window method and measures the position, the size, and the frequency of gust.

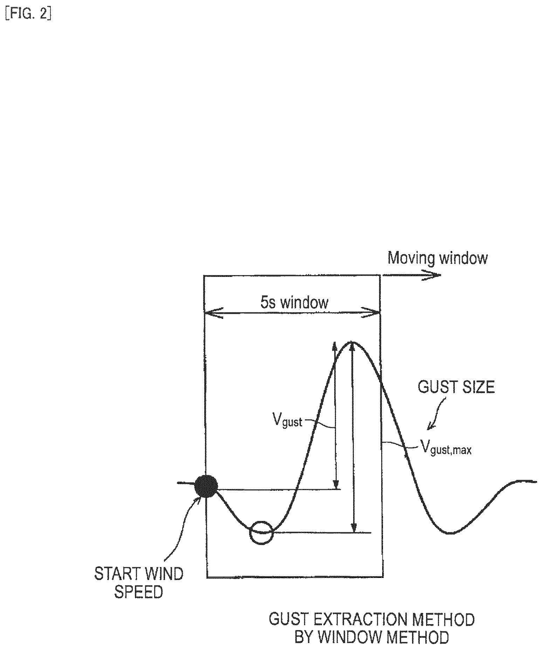

Fig. 2 illustrates a gust extracted by the window method and waveforms in the surroundings thereof. The gust is extracted in the window of 5 seconds, and the size (Vgust) of the gust for the start point and the maximum gust size (Vgust,max) indicating the gust magnitude from the wind speed at the lowest point are obtained.

Note that the extraction of gust is not limited to the window method and the gust may be extracted by another method.

The gust evaluation unit 23A performs determination of gust shapes using a rainflow-counting method, for example, on the time history waveform of the extracted gust. The rainflow-counting method is a counting method of counting a stress frequency or a strain frequency for a mechanical structure or the like that is exposed to irregular repeated variation load, and it is possible to count variation waveforms by separating them into cycles. In the present disclosure, this method is adapted for the time-series changing waveform of the wind speed.

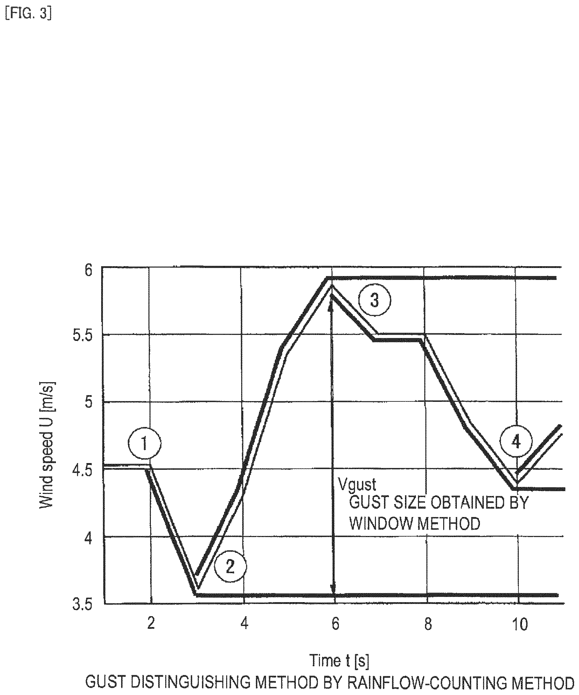

An example of determination of gust shapes will be described below on the basis of Fig. 3. The rainflow-counting method is applied to the wind speed variation waveforms (waveforms in about several seconds before and after the gust, for example, are extracted) in the surroundings of a gust generation part extracted by the window method. A case in which vector sums of sizes including the sign of counted cycles (encircled numbers 1 to 4) is equal to or less than a specific threshold value is determined to be a whole cycle type, and the other cases are determined to be a half cycle type. Also, a case in which the size of the cycle (encircled number 1) immediately before the cycle (encircled number 2) corresponding to a generation position of Vgust,max is equal to or greater than a specific value is defined as modulation-type gust, and the other cases are classified into a monotone-type gust.

The gust shapes obtained by the rainflow-counting method are classified. In the classification, the gust shapes are classified on the basis of waveform evaluation including the sizes of the gust, the positions of the gust, and the like. In the evaluation of gust, occurrence frequencies and the like are evaluated in addition to the gust shapes. Note that for the gust shapes, classification criteria in relation to the sizes of gust, the positions of gust, waveforms, and the like may be provided in advance and the gust shapes can be classified in accordance with the criteria.

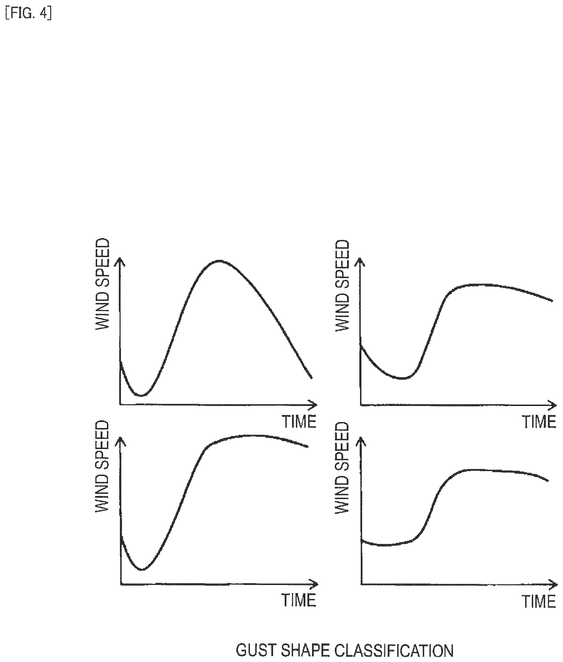

Fig. 4 illustrates a classification example of the classified gust shapes, and the gust shapes are classified into four types depending in the volumes and the positions at the lowest points, and the volumes, the positions, falling shapes, and the like of gust.

Note that these four types of gust shapes are selected in consideration of degrees of influences given to variations in rotation frequencies of the wind turbine. The occurrence frequencies for these shapes and related 10-minute average wind speed values are combined as data sets, and the data sets are regarded as gust evaluation results, the results are weighted and are then accumulated, thereby obtaining indexes of wind conditions at the wind turbine mounting location.

That is, it is possible to perform the gust evaluation by using wind speed recording information, to obtain wind condition evaluation results at the wind turbine mounting location, and to provide a notification of the results using the notification portion 24.

Further, the monitoring terminal 20 receives evaluation results of the gust evaluation unit 23A, and combines the cumulative damage degree on predetermined devices, such as main devices, and evaluates the states using the state evaluation unit 23B.

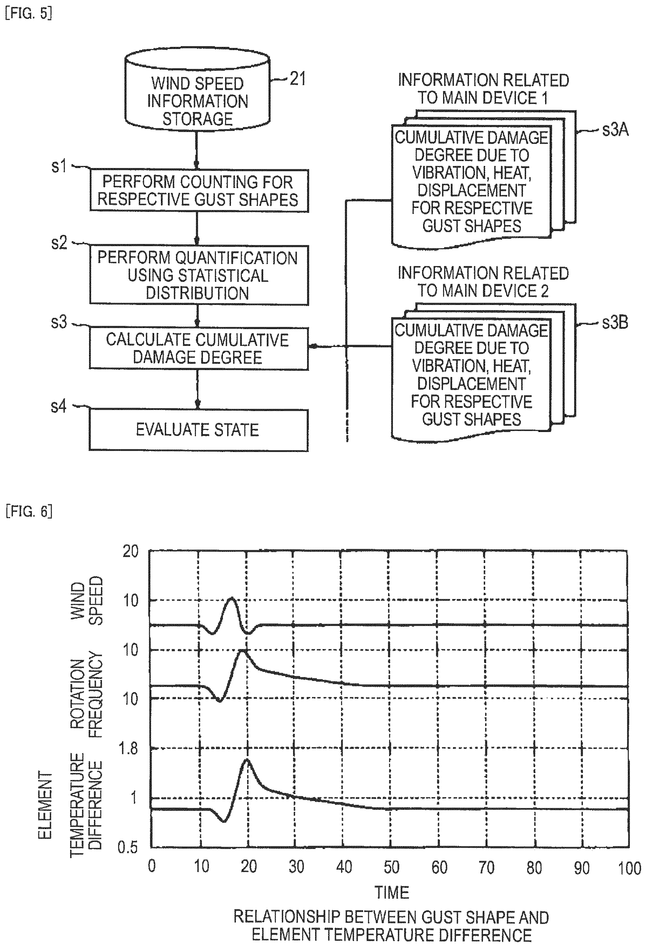

The measurement of the damage degree and the state evaluation are performed on the basis of the gust shapes. An example of the evaluation procedure is illustrated in the flowchart in Fig. 5.

Temporal changes of the wind speed are received from the wind speed information storage 21 and are counted for the respective classified gust shapes (Step s1). After the counting, the temporal changes are quantified using statistical distribution from the gust shapes and the counting results (the number of times of counting) (Step s2). It is possible to perform the quantification by approximating wind speed appearance rates by Weibull distribution and approximating gust occurrence frequencies for the respective wind velocities by Gumbel distribution.

Then, the cumulative damage degree is calculated (Step s3). The cumulative damage degree can be calculated for the respective devices. When it is assumed that one of a plurality of main devices is a first main device and another of main devices, which is different from the first main device, is a second main device as illustrated in Fig. 5, for example, the cumulative damage degree due to vibration, heat, and displacement for the respective gust shapes in relation to the first main device is calculated (Step s3A), and the cumulative damage degree due to vibration, heat, and displacement for the respective gust shapes in relation to the second main device is calculated (Step s3B). These are calculated on the basis of dynamic analysis or the like and device specifications in advance on the basis of the gust shapes.

Fig. 6 is a diagram illustrating a relationship between a gust shape and an element temperature difference. The relationship may be stored in the damage storage 22 or the like in advance. The aforementioned relationship and the like illustrates a result of calculating strength of the wind turbine against gust shapes by using a method, such as analysis, in advance and indicates changes in temperatures of the main devices in a case in which a simple gust occurs, as one example.

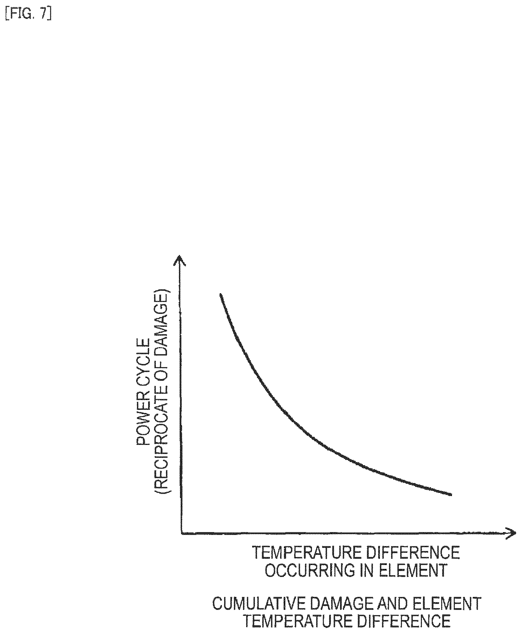

Fig. 7 is a diagram illustrating a relationship between a temperature difference, which occurs in elements, and the cumulative damage degree. As an influence of one simple gust as illustrated in Fig. 6, the damage degree can be obtained by the relational expression in Fig. 7. In this manner, the cumulative damage degree can be calculated using a similar method for elements (for example, vibration, displacement, and the like) necessary to determine the damage degree.

The cumulative damage degree of each element can be calculated on the basis of equations of Numbers 1 and 2 below.

Math. 1 is an equation for calculating power cycle life (PC) of each element in a cumulative manner in a case of an electrical component, and a reciprocal of the power cycle life corresponds to thermal fatigue damage degree. Power cycle life (PC(k)) calculated in advance for each gust shape is accumulated in relation to the quantified (s2) occurrence frequency to thereby obtain the corresponding power cycle life, and the thermal fatigue damage degree can thus be calculated (Step s3A).

Next, Math. 2 is an equation for calculating an equivalent fatigue load (DEFL) related to a load. Load calculated in advance for each gust shape is accumulated in relation to the quantified (s2) occurrence frequency using Math. 1 and thus the corresponding fatigue damage degree can be calculated (Step s3B).

In Math. 2, Fk represents a load amplitude while Nk represents a number of repetitions. Also, Nref represents a number of times corresponding to a reference for evaluation and is set to be about $10^7$ in many cases. Further, m corresponds to a reciprocate of an inclination of a material S-N curve to be evaluated.

[Math. 1]

$$PC = 1 / \left( \sum_{k=1}^{n} \frac{1}{PC(k)} \right)$$

[Math. 2]

$$DEFL = \sqrt[m]{\frac{\sum_{k=1}^{n} F_k{}^m N_k}{N_{ref}}}$$

It is possible to estimate a degree of accumulated damage, remaining life, presence of abnormality, and the like from the result of calculating the cumulative damage degree and thereby to perform state evaluation (Step s4). A notification of the evaluation result can be provided by the notification portion 24. Also, the evaluation result may be able to be transmitted to another device via a network or the like.

That is, the present disclosure makes it possible to: evaluate states by combining information regarding gust shapes and occurrence frequencies obtained from the gust evaluation and the cumulative damage degree of main devices for the respective gust shapes obtained separately; determine a degree of accumulated damage, remaining life, and presence of abnormality; and provide a notification thereof, and relates to premonitory symptom recognition and state monitoring of malfunction that is achieved by appropriately determining wind condition states caused by the gust at a location at which a wind turbine generator is mounted and estimating the damage degree and states of main components on the basis of this determination.

Note that it is possible to perform evaluation of a construction risk due to construction wind conditions before construction by using a simulation result for a wind speed. Also, it is also possible to evaluate degrees of gust in a wind farm or the like in which a plurality of models are present together and to distinguish which of wind conditions and a device itself malfunction occurring in the device of the specific model is caused by. Further, it is possible to improve a running rate and to optimize an operation method by optimizing malfunction replacement at a site in which wind turbine has already been mounted from wind speed data sequentially obtained.

Although the present disclosure has been described above on the basis of the aforementioned embodiment, the present disclosure is not limited to the content of the aforementioned embodiment. The protection scope being defined by the appended claims.

The present application is based on Japanese Patent Application (Japanese Patent Application No. 2016-132661) filed July 4, 2016.

**Claims**

1.  A wind turbine monitoring apparatus configured to monitor a wind turbine (1) by acquiring a temporal change in a wind speed of the wind turbine (1), the monitoring apparatus comprising:

    a monitoring controller (23) configured to obtain a time history waveform of the wind speed from wind speed data indicating the temporal change in the wind speed of the wind turbine (1), wherein the monitoring controller (23) is configured to:

    extract a gust from the time history waveform of the wind speed;
    perform gust evaluation; and
    calculate damage degree on predetermined devices in the wind turbine (1) in a cumulative manner on the basis of the gust evaluation for the respective gust shapes of the gust,

    **characterized in that** the monitoring controller (23) is configured to classify the gust shapes using the gust evaluation,

    the monitoring controller (23) has information related to the damage degree on the predetermined devices for each of the classified gust shapes, and
    the monitoring controller (23) is configured to determine at least one of a degree of damage, remaining life, and presence of abnormality on the basis of the gust shapes and the number of times of counting in addition to the cumulative damage degree.

2.  The monitoring apparatus according to claim 1, wherein the monitoring controller (23) is configured to acquire the wind speed data via a network.

3.  The monitoring apparatus according to claim 1 or 2, wherein the gust evaluation comprises measuring at least one of a volume and an occurrence frequency of the gust.

4.  The monitoring apparatus according to claim 3, wherein the gust evaluation comprises measuring positions of the gust with the gust shapes.

5.  The monitoring apparatus according to claim 1, wherein the monitoring controller (23) is configured to calculate the damage degree on the predetermined devices in a cumulative manner in accordance with the gust shapes and the occurrence frequency of the gust.

6.  The monitoring apparatus according to any one of claims 1 to 5, wherein the monitoring controller (23) is configured to extract the gust using a window method from the time history waveform of the wind speed.

7.  The monitoring apparatus according to any one of claims 1 to 6, wherein the monitoring controller (23) is configured to determine the gust shapes using a rainflow-counting method from a time history waveform comprising the extracted gust.

8.  The monitoring apparatus according to any one of claims 1 to 7, wherein the monitoring controller (23) is configured to evaluate the damage degree by using at least one of displacement response, load response, vibration response, and heat response for the predetermined devices.

9.  A wind turbine monitoring method comprising the steps of:

    acquiring wind speed data that indicates a temporal change in a wind speed of a wind turbine (1);
    obtaining a time history waveform of the wind speed on the basis of the acquired wind speed data;
    extracting a gust from the time history waveform of the wind speed and performing gust evaluation;
    classifying the gust shapes using the gust evaluation and using information related to the damage degree on the predetermined devices for each of the classified gust shapes;
    determining at least one of a degree of damage, remaining life, and presence of abnormality on the basis of the gust shapes and the number of times of counting in addition to the cumulative damage degree; and
    calculating damage degree on predetermined devices in the wind turbine (1) in a cumulative manner on the basis of the gust evaluation for the respective gust shapes.

10. A wind turbine monitoring program for causing a computer to execute steps of:

acquiring wind speed data that indicates a temporal change in a wind speed of a wind turbine (1);

obtaining a time history waveform of the wind speed on the basis of the acquired wind speed data;

extracting a gust from the time history waveform of the wind speed;

performing gust evaluation on the basis of the extracted gust;

classifying the gust shapes using the gust evaluation and using information related to the damage degree on the predetermined devices for each of the classified gust shapes;

determining at least one of a degree of damage, remaining life, and presence of abnormality on the basis of the gust shapes and the number of times of counting in addition to the cumulative damage degree; and

calculating damage degree on predetermined devices in the wind turbine (1) in a cumulative manner on the basis of the gust evaluation for the respective gust shapes.

11. A computer-readable storage medium in which the monitoring program according to claim 10 is stored.

12. A monitoring apparatus comprising:

at least one processor; and

at least one memory storing computer-readable instructions which, when executed by the processor, cause the monitoring apparatus to:

acquire wind speed data that indicates a temporal change in a wind speed of a wind turbine (1);

extract a gust on the basis of the wind speed data;

measure parameters associated with the gust;

classify the gust shapes using the gust evaluation and use information related to the damage degree on the predetermined devices for each of the classified gust shapes;

determine at least one of a degree of damage, remaining life, and presence of abnormality on the basis of the gust shapes and the number of times of counting in addition to the cumulative damage degree; and

calculate damage degree on the wind turbine (1) in a cumulative manner on the basis of the measured parameters for the respective gust shapes.

**Patentansprüche**

1. Windturbinen-Überwachungsvorrichtung, die konfiguriert ist zum Überwachen einer Windturbine (1) durch das Erhalten einer zeitlichen Änderung der Windgeschwindigkeit der Windturbine (1), wobei die Überwachungsvorrichtung umfasst:

eine Überwachungssteuereinrichtung (23), die konfiguriert ist zum Erhalten einer Zeitverlaufswellenform der Windgeschwindigkeit aus Windgeschwindigkeitsdaten, die die zeitliche Änderung der Windgeschwindigkeit der Windturbine (1) angeben,

wobei die Überwachungssteuereinrichtung (23) konfiguriert ist zum:

Extrahieren eines Windstoßes aus der Zeitverlaufswellenform der Windgeschwindigkeit,

Durchführen einer Windstoßbewertung, und

Berechnen des Beschädigungsgrads an vorbestimmten Einrichtungen in der Windturbine (1) auf kumulative Weise basierend auf der Windstoßbewertung für die entsprechenden Windstoßformen des Windstoßes,

**dadurch gekennzeichnet, dass**:

die Überwachungssteuereinrichtung (23) konfiguriert ist zum Klassifizieren der Windstoßformen unter Verwendung der Windstoßbewertung,

die Überwachungssteuereinrichtung (23) Informationen in Bezug auf den Beschädigungsgrad an den vorbestimmten Einrichtungen für jede der klassifizierten Windstoßformen aufweist, und

die Überwachungssteuereinrichtung (23) konfiguriert ist zum Bestimmen des Beschädigungsgrads, der restlichen Lebensdauer und/oder des Vorhandenseins einer Anormalität basierend auf den Windstoßformen und der gezählten Häufigkeit zusätzlich zu dem kumulativen Beschädigungsgrad.

2. Überwachungsvorrichtung nach Anspruch 1, wobei die Überwachungssteuereinrichtung (23) konfiguriert ist zum Erhalten der Windgeschwindigkeitsdaten über ein Netzwerk.

3. Überwachungsvorrichtung nach Anspruch 1 oder 2, wobei die Windstoßbewertung das Messen des Volumens und/oder der Auftrittshäufigkeit des Windstoßes umfasst.

**4.** Überwachungsvorrichtung nach Anspruch 3, wobei die Windstoßbewertung das Messen von Positionen des Windstoßes mit den Windstoßformen umfasst.

**5.** Überwachungsvorrichtung nach Anspruch 1, wobei die Überwachungssteuereinrichtung (23) konfiguriert ist zum Berechnen des Beschädigungsgrads an den vorbestimmten Einrichtungen auf kumulative Weise in Entsprechung zu den Windstoßformen und der Auftrittshäufigkeit des Windstoßes.

**6.** Überwachungsvorrichtung nach einem der Ansprüche 1 bis 5, wobei die Überwachungssteuereinrichtung (23) konfiguriert ist zum Extrahieren des Windstoßes unter Verwendung einer Fenstermethode aus der Zeitverlaufswellenform der Windgeschwindigkeit.

**7.** Überwachungsvorrichtung nach einem der Ansprüche 1 bis 6, wobei die Überwachungssteuereinrichtung (23) konfiguriert ist zum Bestimmen der Windstoßformen unter Verwendung einer Rainflow-Zählmethode aus einer Zeitverlaufswellenform mit dem darin enthaltenen extrahierten Windstoß.

**8.** Überwachungsvorrichtung nach einem der Ansprüche 1 bis 7, wobei die Überwachungssteuereinrichtung (23) konfiguriert ist zum Bewerten des Beschädigungsgrads unter Verwendung des Verdrängungsverhaltens, des Lastverhaltens, des Vibrationsverhaltens und/oder des Wärmeverhaltens der vorbestimmten Einrichtungen.

**9.** Windturbinen-Überwachungsverfahren, das die folgenden Schritte umfasst:

Erhalten von Windgeschwindigkeitsdaten, die eine zeitliche Änderung der Windgeschwindigkeit einer Windturbine (1) angeben,
Erhalten einer Zeitverlaufswellenform der Windgeschwindigkeit basierend auf den erhaltenen Windgeschwindigkeitsdaten,
Extrahieren eines Windstoßes aus der Zeitverlaufswellenform der Windgeschwindigkeit, und Durchführen einer Windstoßbewertung,
Klassifizieren der Windstoßformen unter Verwendung der Windstoßbewertung, und Verwenden von Informationen in Bezug auf den Beschädigungsgrad an den vorbestimmten Einrichtungen für jede der klassifizierten Windstoßformen,
Bestimmen des Beschädigungsgrads, der restlichen Lebensdauer und/oder des Vorhandenseins einer Anormalität basierend auf den Windstoßformen und der gezählten Häufigkeit zusätzlich zu dem kumulativen Beschädigungsgrad, und
Berechnen des Beschädigungsgrads an vorbestimmten Einrichtungen in der Windturbine (1) auf kumulative Weise basierend auf der Windstoßbewertung für die entsprechenden Windstoßformen.

**10.** Windturbinen-Überwachungsprogramm, das einen Computer zum Ausführen der folgenden Schritte veranlasst:

Erhalten von Windgeschwindigkeitsdaten, die eine zeitliche Änderung der Windgeschwindigkeit einer Windturbine (1) angeben,
Erhalten einer Zeitverlaufswellenform der Windgeschwindigkeit basierend auf den erhaltenen Windgeschwindigkeitsdaten,
Extrahieren eines Windstoßes aus der Zeitverlaufswellenform der Windgeschwindigkeit,
Durchführen einer Windstoßbewertung basierend auf dem extrahierten Windstoß,
Klassifizieren der Windstoßformen unter Verwendung der Windstoßbewertung, und Verwenden von Informationen in Bezug auf den Beschädigungsgrad an den vorbestimmten Einrichtungen für jede der klassifizierten Windstoßformen,
Bestimmen des Beschädigungsgrads, der restlichen Lebensdauer und/oder des Vorhandenseins einer Anormalität basierend auf den Windstoßformen und der gezählten Häufigkeit zusätzlich zu dem kumulativen Beschädigungsgrad, und
Berechnen des Beschädigungsgrads an vorbestimmten Einrichtungen in der Windturbine (1) auf kumulative Weise basierend auf der Windstoßbewertung für die entsprechenden Windstoßformen.

**11.** Computerlesbares Speichermedium, auf dem das Überwachungsprogramm gemäß Anspruch 10 gespeichert ist.

**12.** Überwachungsvorrichtung, umfassend:

wenigstens einen Prozessor, und
wenigstens einen Speicher mit darauf gespeicherten computerlesbaren Befehlen, die bei einer Ausführung durch den Prozessor die Überwachungsvorrichtung veranlassen zum:

Erhalten von Windgeschwindigkeitsdaten, die eine zeitliche Änderung der Windgeschwindigkeit einer Windturbine (1) angeben,
Extrahieren eines Windstoßes basierend auf den Windgeschwindigkeitsdaten,
Messen von mit dem Windstoß assoziierten Parametern,
Klassifizieren der Windstoßformen unter Verwendung der Windstoßbewertung, und Verwenden von Informationen in Bezug auf den Beschädigungsgrad an den vorbestimmten Einrichtungen für jede der klassifizierten Windstoßformen,

Bestimmen des Beschädigungsgrads, der restlichen Lebensdauer und/oder des Vorhandenseins einer Anormalität basierend auf den Windstoßformen und der gezählten Häufigkeit zusätzlich zu dem kumulativen Beschädigungsgrad, und

Berechnen des Beschädigungsgrads an der Windturbine (1) auf kumulative Weise basierend auf den gemessenen Parametern für die entsprechenden Windstoßformen.

## Revendications

1. Appareil de surveillance d'éolienne configuré pour surveiller une éolienne (1) en acquérant un changement temporel d'une vitesse du vent de l'éolienne (1), l'appareil de surveillance comprenant :

un dispositif de commande de surveillance (23) configuré pour obtenir une forme d'onde d'historique temporel de la vitesse du vent à partir de données de vitesse du vent indiquant le changement temporel de la vitesse du vent de l'éolienne (1),

dans lequel le dispositif de commande de surveillance (23) est configuré pour :

extraire une bourrasque à partir de la forme d'onde d'historique temporel de la vitesse du vent ;

effectuer une évaluation de bourrasque ; et calculer un degré d'endommagement sur des dispositifs prédéterminés dans l'éolienne (1) d'une manière cumulée sur la base de l'évaluation de bourrasque pour les formes de bourrasque respectives de la bourrasque,

**caractérisé en ce que** le dispositif de commande de surveillance (23) est configuré pour classer les formes de bourrasque en utilisant l'évaluation de bourrasque,

le dispositif de commande de surveillance (23) a des informations relatives au degré d'endommagement sur les dispositifs prédéterminés pour chacune des formes de bourrasque classées, et

le dispositif de commande de surveillance (23) est configuré pour déterminer au moins l'un parmi un degré d'endommagement, une durée de vie restante, et une présence d'anomalie sur la base des formes de bourrasque et du nombre de comptages en plus du degré d'endommagement cumulé.

2. Appareil de surveillance selon la revendication 1, dans lequel le dispositif de commande de surveillance (23) est configuré pour acquérir les données de vitesse du vent via un réseau.

3. Appareil de surveillance selon la revendication 1 ou 2, dans lequel l'évaluation de bourrasque comprend la mesure d'au moins l'un parmi un volume et une fréquence d'occurrence de la bourrasque.

4. Appareil de surveillance selon la revendication 3, dans lequel l'évaluation de bourrasque comprend la mesure de positions de la bourrasque avec les formes de bourrasque.

5. Appareil de surveillance selon la revendication 1, dans lequel le dispositif de commande de surveillance (23) est configuré pour calculer le degré d'endommagement sur les dispositifs prédéterminés d'une manière cumulée en fonction des formes de bourrasque et de la fréquence d'apparition de la bourrasque.

6. Appareil de surveillance selon l'une quelconque des revendications 1 à 5, dans lequel le dispositif de commande de surveillance (23) est configuré pour extraire la bourrasque en utilisant un procédé à fenêtres à partir de la forme d'onde d'historique temporel de la vitesse du vent.

7. Appareil de surveillance selon l'une quelconque des revendications 1 à 6, dans lequel le dispositif de commande de surveillance (23) est configuré pour déterminer les formes de bourrasque en utilisant un procédé de comptage rainflow (comptage des cycles) à partir d'une forme d'onde d'historique temporel comprenant la bourrasque extraite.

8. Appareil de surveillance selon l'une quelconque des revendications 1 à 7, dans lequel le dispositif de commande de surveillance (23) est configuré pour évaluer le degré d'endommagement en utilisant au moins l'une parmi une réponse à un déplacement, une réponse à une charge, une réponse à des vibrations, et une réponse à la chaleur pour les dispositifs prédéterminés.

9. Procédé de surveillance d'éolienne comprenant les étapes consistant à :

acquérir des données de vitesse du vent qui indiquent un changement temporel d'une vitesse du vent d'une éolienne (1) ;

obtenir une forme d'onde d'historique temporel de la vitesse du vent sur la base des données de vitesse du vent acquises ;

extraire une bourrasque à partir de la forme d'onde d'historique temporel de la vitesse du vent et effectuer une évaluation de bourrasque ;

classer les formes de bourrasque en utilisant l'évaluation des bourrasque et en utilisant des informations relatives au degré d'endommagement sur les dispositifs prédéterminés pour chacune des formes de bourrasque classées ;

déterminer au moins l'un parmi un degré d'endommagement, une durée de vie restante, et une présence d'anomalie sur la base des formes de bourrasque et du nombre de comptages en plus du degré d'endommagement cumulé ; et

calculer un degré d'endommagement sur des dispositifs prédéterminés dans l'éolienne (1) de manière cumulée sur la base de l'évaluation de bourrasque pour les formes de bourrasque respectives.

10. Programme de surveillance d'éolienne pour amener un ordinateur à exécuter les étapes consistant à :

acquérir des données de vitesse du vent qui indiquent un changement temporel d'une vitesse du vent d'une éolienne (1) ;

obtenir une forme d'onde d'historique temporel de la vitesse du vent sur la base des données de vitesse du vent acquises ;

extraire une bourrasque à partir de la forme d'onde d'historique temporel de la vitesse du vent ;

effectuer une évaluation de bourrasque sur la base de la bourrasque extraite ;

classer les formes de bourrasque en utilisant l'évaluation des bourrasque et en utilisant des informations relatives au degré d'endommagement sur les dispositifs prédéterminés pour chacune des formes de bourrasque classées ;

déterminer au moins l'un parmi un degré d'endommagement, une durée de vie restante, et une présence d'anomalie sur la base des formes de bourrasque et du nombre de comptages en plus du degré d'endommagement cumulé ; et

calculer un degré d'endommagement sur des dispositifs prédéterminés dans l'éolienne (1) de manière cumulée sur la base de l'évaluation de bourrasque pour les formes de bourrasque respectives.

11. Support de stockage lisible par ordinateur dans lequel le programme de surveillance selon la revendication 10 est stocké.

12. Appareil de surveillance comprenant :

au moins un processeur ; et

au moins une mémoire stockant des instructions lisibles par ordinateur qui, lorsqu'elles sont exécutées par le processeur, amènent l'appareil de surveillance à :

acquérir des données de vitesse du vent qui indiquent un changement temporel d'une vitesse du vent d'une éolienne (1) ;

extraire une bourrasque sur la base des données de vitesse du vent ;

mesurer des paramètres associés à la bourrasque ;

classer les formes de bourrasque en utilisant l'évaluation des bourrasque et en utilisant des informations relatives au degré d'endommagement sur les dispositifs prédéterminés pour chacune des formes de bourrasque classées ;

déterminer au moins l'un parmi un degré d'endommagement, une durée de vie restante, et une présence d'anomalie sur la base des formes de bourrasque et du nombre de comptages en plus du degré d'endommagement cumulé ; et

calculer un degré d'endommagement sur l'éolienne (1) de manière cumulée sur la base des paramètres mesurés pour les formes de bourrasque respectives.

[FIG. 1]

[FIG. 2]

Moving window

5s window

$V_{gust}$

GUST SIZE

$V_{gust,max}$

START WIND
SPEED

GUST EXTRACTION METHOD
BY WINDOW METHOD

[FIG. 3]

GUST DISTINGUISHING METHOD BY RAINFLOW-COUNTING METHOD

[FIG. 4]

GUST SHAPE CLASSIFICATION

[FIG. 5]

[FIG. 6]

RELATIONSHIP BETWEEN GUST SHAPE AND
ELEMENT TEMPERATURE DIFFERENCE

[FIG. 7]

CUMULATIVE DAMAGE AND ELEMENT
TEMPERATURE DIFFERENCE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009243428 A
- JP 2016008536 A
- US 2006070435 A1
- JP 2016132661 A